# EUROPEAN PATENT SPECIFICATION

(11) **EP 2 744 632 B1**
(45) Date of publication and mention of the grant of the patent: **20.01.2016**
(21) Application number: 12754131.6
(22) Date of filing: 15.08.2012
(51) Int. Cl.: B29C 33/64, B29K 75/00

(54) **SEMI PERMANENT TOOL COATING ENHANCEMENT FOR EXTENDED NUMBER OF RELEASES**
SEMIPERMANENTE WERKZEUGBESCHICHTUNGSVERSTÄRKUNG FÜR EINE GROSSE ANZAHL VON ENTFORMUNGEN
RENFORCEMENT D'UN ENDUIT SEMI-PERMANENT D'UN OUTIL POUR AUGMENTER LE NOMBRE DES DÉMOULAGES

(30) Priority: 15.08.2011 US 201161523783 P
(43) Date of publication of application: 25.06.2014
(73) Proprietor: Johnson Controls Technology Company, Holland, MI 49423 (US)
(72) Inventor: MCEVOY, James, Howell, Michigan 48855 (US); LI, William W., Ypsilanti, Michigan 48197 (US); MCCLARREN, Patricia, Ypsilanti, Michigan 48198 (US)
(74) Representative: Liedhegener, Ralf
(86) International application number: PCT/US2012/050859
(87) International publication number: WO 2013/025752

(56) References cited:
- US-A- 3 624 190
- US-A- 3 883 628
- DATABASE WPI Week 198122 Thomson Scientific, London, GB; AN 1981-39062D XP002686728, -& JP 56 038213 A (KAWANISHI KOGYO KK) 13 April 1981 (1981-04-13)

## Description

### CROSS-REFERENCE TO RELATED APPLICATION

This application claims priority from and the benefit of U.S. Provisional Patent Application Serial No. 61/523,783, entitled "SEMI PERMANENT TOOL COATING ENHANCEMENT FOR EXTENDED NUMBER OF RELEASES," filed August 15, 2011, which is hereby incorporated by reference in its entirety.

### BACKGROUND

The present disclosure relates generally to a semi-permanent release agent capable of enhancing the number of releases and thereby the methodology of using the same in the production of foam objects.

Polyurethanes are a general class of polymers in which organic repeating units are joined by carbamate and urea linkages. Polyurethanes are typically produced by reactions in which a polyol having two or more hydroxyl groups are reacted with a polyisocyanate having two or more isocyanate groups. The hydroxyl groups and isocyanate groups may react with one another in a one-to-one ratio to form a carbamate and urea linkages, and in certain configurations, the relationship can be as wide ranging as from as low as about 0.6 to 1 up about to 1 to 1.3. To facilitate these polymerization reactions, the reaction materials may be heated and, alternatively or additionally, a catalyst may be provided.

Polyurethanes have a wide variety of molded uses, including foam seating, foam padding, sealants, gaskets, and so on. The end use of a given polyurethane is dependant on the particular starting materials reacted to produce the polyurethane (e.g., the molecular structure of the polyol and/or polyisocyanate), and the conditions under which the starting materials are reacted. For instance, polyurethane foam products, and in particular foam seating, foam paneling, and other shaped polyurethane foams, are often produced inside of a mold cavity having a shape corresponding to a desired shape of the foam.

To produce the polyurethane foam inside of the mold cavity, the materials of a foam formulation, which includes an unreacted mixture of polyol and polyisocyanate, are disposed in the mold. The mixture then reacts, for example after the mixture is heated. During the reaction, the mixture foams and expands to fill the interior of the mold cavity, thereby assuming the shape of the cavity. Additional materials may be provided to enhance foaming of the mixture. For example, water may be used as one type of many different blowing agents to allow the urethane mixture to fill the mold. Water, which is the most environmentally friendly blowing agent, reacts with the polymer and polymerization components to create urea. The foam is allowed to harden within the mold cavity. Once the foam hardens, the foam object (e.g., a seat cushion) may be removed from the mold and used (e.g., within a seat) after a cure time. The shorter the cure time, the better for manufacturing and profitability.

The mold cavity may be coated with a mold release agent to facilitate removal of the foam object from the mold cavity. Typical mold release agents include wax-based release agents that are applied to a surface of the mold cavity before the foam production process is performed. As an example, the wax-based release agents may include a high melt point wax to initially seal the surface, and an additional liquid wax having a mixture of various melt point waxes that is applied over the sealed surface before each foam production process (i.e., before each individual foam object is formed). During production of a foam object, the wax melts during the molding process (i.e., during polymerization) and, in some situations, may vaporize. The wax may then return to solid form as the urethane is finally molded. As may be appreciated, these phase changes consume energy during production of the foam article. Moreover, some of the wax is transferred to the urethane article, and some of the wax remains in the mold. Unfortunately, these wax release agents can fail to provide suitable foam release properties even after a single use, or after a limited number of releases (e.g., less than 1000). In other words, after a limited number of cycles of mold coating, foam production, and foam release, certain wax-based release agents can fail to facilitate the release of the foam from the mold cavity in subsequent foam production cycles. Unfortunately, this can result in the foam material sticking to the surface of the mold cavity, which causes the foam to rupture or tear when the foam is removed from the mold.

Because the release properties of these wax-based release agents can be significantly reduced after a single use (or a fewer-than-desired number of uses), they are often replenished each time a foam object is produced. Furthermore, replenishing the wax-based release agent in this manner may increase the frequency with which the mold cavity is cleaned, such as to remove foam or wax debris, or any other surface contaminants that can have a deleterious effect on foam production. Therefore, the provision of a wax-based release agent within a given mold cavity can represent a significant capital investment in the production of a series of foam objects (e.g., a set of seat cushions). Accordingly, typical mold release materials are often inadequate or are subject to further improvement.

US 3 624 190 A discloses a method of molding polyurethane foam comprising depositing a mold release agent selected from the group consisting of polyethylene, fluorocarbon polymers, silicone resins, organic waxes and silicone rubbers, on the surface of a mold whereby a treated mold surface is obtained, placing a polyurethane foam composition into the treated mold, allowing the foam to rise, curing the polyurethane foam and demolding to obtain a cured polyurethane foam product.

### BRIEF DESCRIPTION OF THE INVENTION

The present disclosure includes embodiments directed towards overcoming these and other shortcomings of wax-based release agents. For example, a first embodiment of the present invention relates to a system including an extended life mold release agent configured to coat a surface of a mold cavity. The extended life mold release agent includes a first material configured to be placed in direct physical contact with the surface of the mold cavity to seal the surface and a second material configured to coat the first material to protect the first material during a foam production process performed within the mold cavity. The second material includes a siloxane oil.

Another embodiment of the present invention relates to a foam molding system. The system includes a mold having a base material and a mold cavity formed in the base material. The mold cavity has a geometry corresponding to a desired shape of a foam object. A coating is disposed on a surface of the mold cavity and includes a siloxane oil adapted to increase the lubricity of the surface.

A further embodiment of the present invention relates to a method including preparing a mold cavity surface with an extended life mold release agent having a silicone oil. The method also includes performing a foam production cycle, which includes disposing a foam formulation in the mold cavity, polymerizing the foam formulation in the mold cavity to form a foam object having a shape corresponding to the geometry, and removing the foam object from the mold. The method can comprise performing the foam production cycle at least approximately 5000 times while maintaining sufficient lubricity of the mold cavity surface such that the foam object does not rupture upon removal from the mold, and wherein only the silicone oil of the coating is replaced during the process of performing the foam production cycle the approximately 5000 times. Preparing the mold cavity surface with the extended life mold release agent can comprise spraying the silicone oil over the mold cavity surface. The silicone oil can be sprayed onto a base layer disposed directly on the mold cavity surface, wherein the base layer comprises a ceramic, a plastic, a metal, or a combination thereof. The foam composition can comprise a polyhydroxyl source, a polyisocyanate source, and a catalyst configured to catalyze a reaction between hydroxyl groups of the polyhydroxyl source and isocyanate groups of the polyisocyanate source. The catalyst can comprise an amine catalyst, a bismuth catalyst, a tin catalyst, or a combination thereof.

### DRAWINGS

FIG. 1 is a schematic illustration of an embodiment of a foam object production system in which a foam formulation is provided to a mold cavity to produce the foam object.
FIG. 2 is an expanded cross-sectional view taken along line 2-2 of FIG. 1 illustrating an embodiment of a semi-permanent release agent layer disposed over a surface of the mold cavity, and an additional layer disposed over the semi-permanent release agent layer to extend the life of the semi-permanent release agent layer.
FIG. 3 is a schematic representation of a thermal gradient between a base material of the coated mold of FIG. 1 and a foam formulation disposed within a mold cavity of the coated mold.
FIG. 4 is a process flow diagram illustrating an embodiment of a method for producing a foam object using the coated mold of FIG. 1.

### DETAILED DESCRIPTION

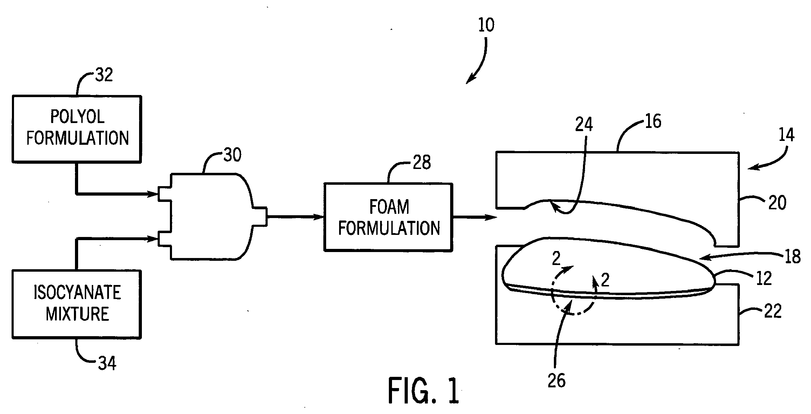

FIG. 1 is a schematic overview of a system 10 for preparing a foam object 12 (e.g., a polyurethane seat cushion) within a mold 14. The mold 14 includes a base material 16 and a mold cavity 18 formed into the base material 16. The mold cavity 18 is configured to shape the foam object 12 as the foam is produced. The base material 16 may include a metal (e.g., aluminum, steel, nickel, or a combination thereof, or other alloyed metals), an epoxy, a composite, or a combination thereof, or similar materials that are capable of providing mechanical stability for the foam produced within the cavity 18. In some embodiments, the base material 16 may be selected so as to allow heat to be imparted from an outside source to the polymerization process performed within the mold cavity 18. That is, the base material 16 may have a desirable heat transfer coefficient. The mold cavity 18, which is shaped to form the foamed object 12, is defined by a first and second piece 20, 22, each of which have an inner surface 24. However, it should be noted that in other embodiments, the mold cavity 18 may be formed from a single piece, or more than two pieces, each piece having an inner surface 24 for contacting the foam object 12. The number of pieces that form the mold cavity 18 may depend on the particular shape and/or size of the foam object to be produced and the method used for producing the foam object. As may be appreciated, the mold cavity 18 takes the form of the desired shape of the foam object 12 when the first and second pieces 20, 22 are placed in contact with one another at their extents surrounding the cavity 18.

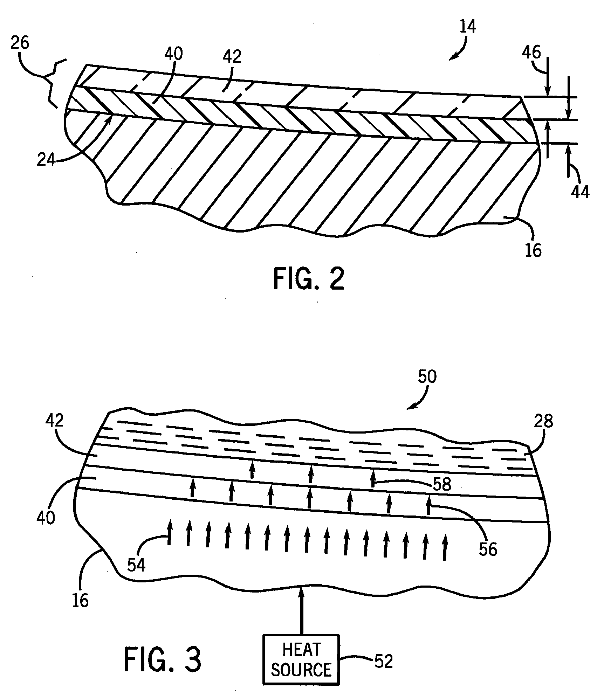

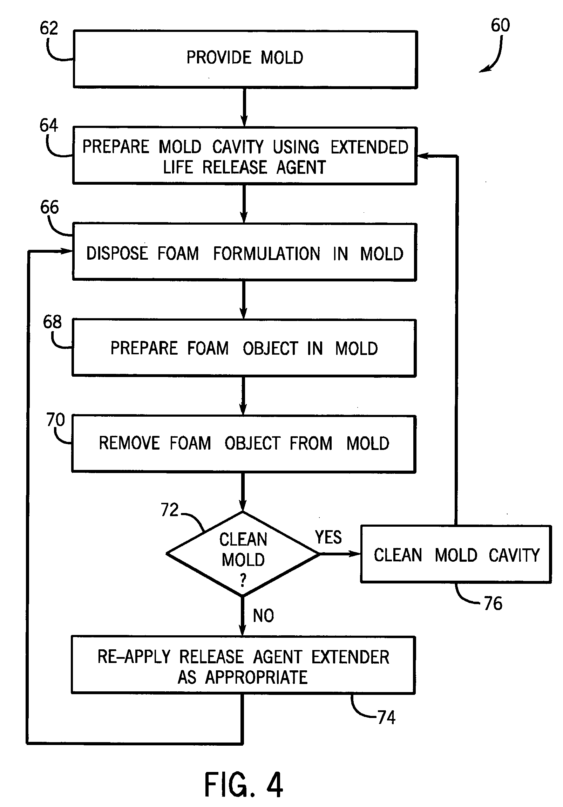

As discussed in greater detail below with respect to FIGS. 2 and 4, an extended life mold release agent 26 is coated on the inner surfaces 24 to increase the lubricity of the inner surfaces 24. Increasing the lubricity of the inner surfaces 24 facilitates the release of the foam object 12 from the mold 14 without rupturing the foam object 12 and prevents undesirable tearing and contamination of produced foam objects. The extended life mold release agent 26, in a general sense, includes a permanent or semi-permanent coating disposed on the base material 16, and an extender coating disposed on the permanent or semi-permanent coating. In accordance with certain aspects of the present disclosure, the extended life mold release agent 26 may include materials that are configured to provide beneficial lubricity to the inner surfaces 24 for more than approximately 1000 to 150000 cycles of foam object production, such as more than approximately 5000 or more than approximately 6000 cycles (e.g., approximately 6000, 7000, 8000, 9000, 10,000 cycles or more). Indeed, in certain embodiments, the extended life mold release agent 26 may impart a desirable amount of lubricity to the inner surfaces 24 for approximately 16,000 cycles. Thus, as used herein, the phrase "extended life" refers to the capability of the extended life release agent 26 to impart desirable lubricious qualities to the inner surfaces 24 defining the mold cavity 18 for more cycles than traditional release agents. For example, wax-based release agents are typically only capable of imparting such lubricity to the inner surfaces 24 for no more than 1000 cycles.

During operation of the system 10, various materials are mixed to ultimately produce a foam formulation 28, which is a reactive mixture capable of forming the foam object 12 inside the mold 14 when subjected to suitable polymerization conditions. In the present context, the foam object 12 is a polyurethane foam object. Accordingly, the foam formulation 28 is produced from materials capable of forming repeating carbamate linkages (i.e., a polyurethane) and urea linkages from water and isocyanate. In the illustrated embodiment, the foam formulation 28 is produced by mixing, in a mixing head 30, a polyol formulation 32 and an isocyanate mixture 34. However, it will be appreciated that in certain embodiments, the foam formulation 28 may be produced upon mixing the polyol formulation 32 and the isocyanate mixture 34 directly in the mold cavity 18.

The polyol formulation 32 may include, among other reactants, polyhydroxyl compounds (i.e., small molecules or polymers having more than one hydroxyl unit including polyols and copolymer polyols) such as polyether polyol, synthetic resins commercially available from Bayer Materials Science LLC. The polyol formulation 32 may also include a blowing agent (e.g., water, volatile organic solvents), a crosslinker, a surfactant, and other additives (e.g., cell openers, stabilizers). The polyol formulation 32 may further include other polymeric materials, such as copolymer materials that are configured to impart certain physical properties to the foam object 12. One example of such a copolymer is a styrene-acrylonitirile (SAN) copolymer. Further, in certain embodiments, a catalyst configured to facilitate polyurethane production (i.e., reaction between the hydroxyl groups of the polyol formulation 32 and the isocyanate groups of the isocyanate mixture 34) may be used, and may be a part of the polyol formulation 32.

It should be noted that, in accordance with the present embodiments, the extended life mold release agent 26 enables the use of catalysts that would traditionally be considered unsuitable for use in polyurethane foam production processes where wax-based release agents are employed in the mold cavity 18. For example, certain amines (e.g., tertiary amines), amine salts, organometals (e.g., organobismuth and/or organozinc compounds), or other similar catalysts may be incompatible with wax-based release agents. Indeed, wax-based release agents can cause catalysts to be less effectual (e.g., by reacting with or complexing with the catalyst) and, in some situations, allow the catalysts to react. For example, the catalysts may react with the wax, causing heat generation. The heat generation may force the catalysts through phase changes, which can cause energy loss to the foam production process. Indeed, as much as 20% of the energy input into the foam production process may be lost to phase changes such as these.

Conversely, catalysts such as these may be readily incorporated into the polyol formulation 32 when the extended life mold release agent 26 of the present disclosure is disposed on the inner surfaces 24. Commercial examples of catalysts that may be incorporated into the polyol formulation 32 in accordance with present embodiments include DABCO^{®} 331v amine catalyst (1,4-diazabicyclo[2.2.2]octane) available from Sigma Aldrich Co., LLC of St. Louis, MO. and BiCAT^{®} bismuth catalysts available from The Shepherd Chemical Company of Norwood, OH. Indeed, the ability to include a wider variety of catalysts into the polyol formulation 32 may reduce the temperature at which polyurethane formation is initiated, and may also produce properties only attainable by using certain catalysts. That is, the extended life mold release agent 26 may enable the formation of polyurethane foams having improved physical properties, such as improved wet set, decreased hysteresis loss, and improved durability, resiliency, and resistance to tearing. Furthermore, the ability to use improved catalyst systems may increase reaction efficiency, which can reduce material cost through a reduction in the reactive material suitable for producing a given quantity of foam. For example, a reduction of 10 to 20% of the reactive material of the foam formulation 28 may be achieved. Table 1 below provides example components of a polyol formulation 28 and their respective amounts.

| Table 1- Example Polyol Formulation | |
|---|---|
| Component | Amount (parts per hundred polyol) |
| Base Polyol (no solids) | 0-100 |
| Copolymer Polyol (with solids) | 0-100 |
| Water (Blowing Agent) | 0-9 |
| Crosslinker | 0-6 |
| Catalyst | 0.001-5 |
| Surfactant | 0.01-10 |

The isocyanate mixture 34, which is reacted with the polyol formulation 32 in the mold 14, may include one or more different polyisocyanate compounds. Examples of such compounds include methylene diphenyl diisocyanate (MDI), toluene diisocyanate (TDI), or other such compounds having two or more isocyanate groups. The polyisocyanate compounds may also include prepolymers or polymers having an average of two or more isocyanate groups per molecule. The particular polyisocyanate compounds used may depend on the desired end use (i.e., the desired physical properties) of the foam object 12.

As noted above, the extended life mold release agent 26 may be configured to provide suitable lubricity for a greater number of cycles than can be attained using wax-based release agents. For example, the permanent or semi-permanent coating may provide suitable lubricity for a certain number of cycles, and the extender coating may extend the life of the permanent or semi-permanent coating such that the permanent or semi-permanent coating provides suitable levels of lubricity for an even greater number of cycles. The configuration of the extended life release agent 26 may be further appreciated with reference to FIG. 2, which is an expanded cross-sectional view of a portion of the mold 14 of FIG. 1 taken along line 2-2.

The extended life release agent 26 of FIG. 2 includes a base layer 40 disposed directly onto the inner surface 24, and an extender material 42 disposed directly onto the base layer 40. In accordance with present embodiments, the base layer 40 may be considered to be a permanent or semi-permanent coating in that it may provide suitable lubricity for the mold cavity 18 for a relatively large number of foam production cycles (e.g., 5000 cycles or more). Indeed, the number of foam production cycles is greater than would be attained using a wax-based release agent.. The base layer 40 may include or may be formed entirely from metals, ceramics, plastics, or any combination thereof. As an example, the base layer 40 may include ceramics such as metal oxides (e.g., silicon dioxide (SiO₂), titanium dioxide (TiO₂)), carbides (e.g., silicon carbide), borides, nitrides (e.g., boron nitride), or silicides, plastics such as polytetrafluoroethylene (PTFE) or other fluoropolymer or lubricative coatings, or a combination of materials (e.g., a combination of metal and plastic) such as nickel-PTFE.

The base layer 40 may be disposed on the inner surfaces 24 using techniques appropriate for the particular materials chosen. For example, ceramics and/or metals may be pressed, sintered, or plated on the inner surfaces 24, while plastics may be coated or sprayed onto the inner surfaces 24. In one embodiment, the base layer 40 may be formed from the base material 16 of the mold 14, such as by anodization or similar surface modification techniques. Further, while the base layer 40 is distinct from the extender material 42, in certain embodiments, the base layer 40 may include, as a portion, the same or a similar material as the material used as the extender material 42. Indeed, because the materials of the base layer 40 may be subject to degradation and a concomitant loss of lubricity, the extender material 42 may act as a renewing agent to extend the number of releases for which the base layer 40 is suitable.

Specifically, the extender material 42 may be selected so as to provide a suitable amount of lubrication under foam production conditions, and may also be selected to provide enhanced protection of the base layer 40 and the inner surface 24 of the mold 14. In accordance with certain embodiments of the present disclosure, the extender material may include siloxane-based materials, such as siloxane based-oils that can be applied over the base layer 40. The siloxane-based material of the extender material may be a polymerized siloxane, a siloxane oligomer, a cyclic siloxane, or a combination thereof. For example, polymeric siloxanes in accordance with the present disclosure may have the general formula:

R-(Sil)-SiR'₃

wherein R represents an aliphatic or aromatic termination unit, and (Sil) represents a series of siloxane repeating units. The siloxane repeating units may be the same, or may be different. For example, in some embodiments, the siloxane repeating units may have the following general formula: 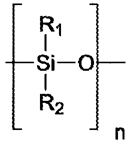 wherein R₁ and R₂ are independently aliphatic or aromatic substituents having between 1 and 8 carbon atoms. Aliphatic groups that may be used as substituents include, for example, an alkyl group, a cycloalkyl group, an alkenyl group, a cycloalkenyl group, an alkynyl group, an alkadienyl group, a cyclic group, and the like. Thus, aliphatic groups may include, for example, hydrocarbyls such as paraffins and alkenyls. For example, the aliphatic groups may include such groups as methyl, ethyl, propyl, n-butyl, tert-butyl, sec-butyl, isobutyl, amyl, isoamyl, hexyl, cyclohexyl, heptyl, octyl, and so forth.

Aromatic groups that may be used as substituents include, for example, phenyl, naphthyl, anthracenyl, and the like. Substituted derivatives of these compounds are also included, wherein each group may have from 6 to 8 carbon atoms. Such substituted derivatives may include, for example, phenyl, tolyl, xylyl, and the like, including any heteroatom substituted derivatives thereof.

As an example of a siloxane-based material, the extender coating 42 may include polydimethyl siloxane (PDMS), where R₁ and R₂ are both methyl. In other embodiments, the repeating units of the siloxane may alternate, as represented by the following general formula: 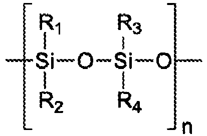 wherein R₁, R₂, R₃, and R₄ are independently aliphatic or aromatic substituents having between 1 and 8 carbon atoms. The aliphatic or aromatic substituents may independently include any of the example substituents set forth above. As another example, the extender material 42 may include a cyclic dimethylsiloxane, which has the structure: 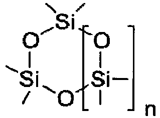 wherein n may be 1 or 2. For example, the cyclic siloxane may be hexamethylcyclotrisiloxane (HMCTS, n=1), octamethylcyclotetrasiloxane (OMCTS, n=2), or any other cyclic siloxane having the desired lubricity and other liquid properties described herein.

It should be noted that the substituents attached to the silicon atoms of the siloxane oils (i.e., the particular aliphatic or aromatic substituent chosen for R₁-R₄) may be selected based on certain desirable properties of the extender material 42 as well as other considerations, such as the materials of the base layer 40, the catalyst and other materials in the foam formulation 28, the type of polyurethane foam to be produced, and the desired surface processes for releasing the foam object 12 from the mold 14. Various surface processes, tribological properties, measurements thereof, and other considerations associated with thin liquid films, such as various friction forces, viscosity, and liquid film compression, are described in chapters 29 and 30 of "Springer Handbook of Nanotechnology," (Springer Publishing 2011) by Bharat Bhushan, which is incorporated by reference herein in its entirety.

In the present context, in embodiments where the substituent is an aliphatic substituent, it is presently contemplated that the length of the aliphatic substituent (i.e., the number of carbon atoms) as well as the bulk of the aliphatic substituent (e.g., linear or branched) may determine the lubricity of the surface and the siloxane oil's ability to shield the base layer 40 and the base material 16 from certain reactants of the foam formulation 28, such as the catalyst. Furthermore, in some embodiments, as the molecular weight of the siloxane polymer or oligomer is increased (i.e., the larger the number represented by n), the higher the lubricity and the longer the life of the base layer 40 and the mold 14 may be extended.

The extender material 42, as noted above, is configured to increase the number of cycles that the base layer 40 is able to provide a suitable amount of lubrication for removal of the foam object 12 from the mold 14. The extender material 42 may therefore act as a protective coating for the base layer 40 and the inner surface 24. In addition to its beneficial properties with regard to the base layer 40 and the base material 16 of the mold 14, the extender material 42 may alter the interface between the foam produced within the mold cavity 18 and the release agent (i.e., the surface of the release agent). In an embodiment, altering the interface in this manner may enable the use of a wide variety of polyurethane polymerization catalysts, as noted above. Furthermore, it is presently contemplated that the extended life release agent 26 (i.e., the extender material 42 in conjunction with the base layer 40) may reduce the amount of energy provided to the mold 14 for reaching a desired reaction temperature within the mold cavity 18. That is, the base layer 40 and the extender material 42 may each have a heat transfer coefficient that enables a greater efficiency of heat transfer between the mold base material 16 and the foam formulation 28 compared to wax-based release agents. Indeed, a thickness 44 of the base layer 40 and a thickness 46 of the extender material 42 may be selected based on the desired level of surface coating as well as the efficiency of heat transfer from the mold 14 to the foam formulation 28 when the formulation 28 is in the mold cavity 18.

The thickness 46 of the extender material 42 applied to the base layer 40 may be also function of the number of releases that the base layer 40 is capable of providing tear-free release. That is, the thickness 46 may be a function of the number of times that the extender material 42 has been applied to the base layer 40, as well as the amount of cycles that the base layer 40 has been in operation. Generally, the thickness 46 of the extender material 42 may be between 1 and 100% of the thickness 44 of the base layer 40, such as between approximately 1 and 60%, 1 and 50%, 1 and 40%, 1 and 30%, 1 and 20%, or 1 and 10%. As an example, in one embodiment, the thickness 44 of the base layer 40 may be between approximately 60 and 70 microns, and the thickness 46 of the extender material 46 may be between 1 and 7 microns. In other embodiments, the thickness 46 of the extender material 42 may range between approximately 1 and 200 microns, such as between approximately 5 and 150 microns, and the thickness 44 of the base layer 40 may range between approximately 1 and 100 microns, such as between approximately 1 and 90 microns, 1 and 75 microns, 10 and 70 microns, or 20 and 50 microns.

As noted above, there may be a thermal gradient from the base material 16 of the mold 14 to the foam formulation 28 resulting from the thicknesses 44, 46 of the base layer 40 and the extender material 42. As depicted in FIG. 3, a system 50 may include an external heat source 52, which provides thermal energy to the base material 16 of the mold 14. As noted above, the thermal energy used by foam production systems where the inner surface 24 of the mold cavity 18 is coated with the extended life mold release agent 26 may be lower than those systems that utilize wax-based release agents. The base material 16 conducts the thermal energy at a first rate, depicted as arrows 54, and which is dependent on the heat transfer coefficient of the base material 16. Thermal energy is then transferred from the base material 16 to the base layer 40 of the extended life release agent 26. The base layer 40 conducts the thermal energy at a second rate, depicted as arrows 56, and which is dependent on the heat transfer coefficient of the materials of the base layer 40. The thermal energy is then transferred to the extender material 42, which conducts the thermal energy at a third rate, depicted as arrows 58, and which is dependent on the heat transfer coefficient of the extender material 42. Finally, the thermal energy is transferred to the foam formulation 28, which is disposed within the mold cavity 18, to promote or initiate the polymerization reaction. It will therefore be appreciated that as the heat transfer coefficient of the extended life release agent 26 is increased (e.g., by increasing the heat transfer coefficient of the base layer 40 and/or the extender material 42), the smaller the thermal gradient between the mold 14 and the foam formulation 28. In accordance with present embodiments, the extended life release agent 26 has a higher heat transfer coefficient compared to wax-based release agents. This may enable more efficient heating of the foam formulation 28 and a subsequent reduction of the heat provided by the external heat source suitable for attaining a desired temperature of the formulation 28. Therefore, the temperature to which the mold 14 is heated may be unique compared to systems that utilize wax-based release agents. For example, the total energy input into the mold 14 for producing the foam object 12 may be reduced by between approximately 10 and 30% compared to wax-coated mold systems.

Keeping in mind that processes in accordance with present embodiments may utilize a wider range of polymerization catalysts and may also have reduced external heat requirements compared to wax-based systems, the present embodiments also provide a method 60 for producing foam objects within the coated mold 14 of FIG. 1, illustrated as a process flow diagram in FIG. 4. In the present context, the method 60 includes steps relating to the coating of the mold, the preparation of the foam, and the release and cleaning of the mold after foam formation. However, it should be noted that in certain embodiments, the method 60 may include fewer or more steps than presently illustrated.

The method 60 includes, as a preliminary step, providing a mold, such as the mold 14 having the mold cavity 18 for forming the foam object 12 in a certain desired shape (block 62). Again, the mold cavity 18 will have a predetermined geometry corresponding to the outer surface of the foam object 12. The method 60 may also include preparing the mold cavity 18 using the extended life release agent 26 (block 64). For example, the extended life release agent 26 may be applied to the base material 16 in a step-wise fashion where the base layer 40 is first applied to the base material 16 by lamination, painting, spraying, plating, sintering, sputtering, or any suitable layer deposition technique. The extender material 42 (e.g., a siloxane oil) is then applied over the base layer 40 as a protective coating by suitable oil deposition techniques including spray deposition, painting, pouring, or any similar technique.

Once the mold cavity 18 is prepared, the foam formulation 28 may be disposed in the mold 14 (i.e., in the mold cavity 18) (block 66). For example, in embodiments where the mold cavity 18 is open while the foam formulation 28 is provided, the foam formulation 28 may be poured into the cavity 18. However, in embodiments where the mold cavity 18 is closed, the foam formulation 28 may be injected into the cavity 18. It should be noted that the foam formulation 28 may be preformed (i.e., premixed) before provision to the mold cavity 18, or may be formed in the mold cavity 18 after its component streams (i.e., the polyol formulation 32 and the isocyanate mixture 34) are provided to the mold cavity 18.

The foam formulation 28 may then be suitably processed to produce the foam object 12 (block 68). For instance, heat may be provided to the foam formulation 28 to cause the formulation to polymerize. For example, the foam formulation 28 may reach an internal temperature of between approximately 160 and 190 °F (e.g., 170 °F). As noted above, the heat provided by the heat source 52 may be reduced for the extended life release agent 26 compared to wax-based release agents (e.g., to a initial temperature of 150 °F). Furthermore, in some embodiments, the increased heat transfer properties of the extended life release agent 26 may also enable the formulation 28 to be polymerized without the use of a catalyst or use of catalyst that can be activated which normally would not work in molded foams and inhibit flow.

The resulting foamed material may then be retained within the mold cavity 18 for a period in which the foam is cured and allowed to harden. For example, the curing process may include heating the foam to between approximately 160 and 180 °F for between approximately 1 and 60 minutes. After curing, in certain embodiments, the foam object 12 may undergo one or more crushing processes (e.g., a time pressure release (TPR) process which is prior to removal from the mold 14) in which the sealing pressure of the mold 14 is reduced to allow gas to escape from the mold 14.

Once the foam object 12 is produced, it may be removed from the mold cavity (block 70), or "demolded." The demolded object may also undergo one or more finishing steps, such as additional crushing or sanding. It should be noted that during the removal of the foam object 12 from the mold cavity 18, a portion of the extended life mold release agent 26 (e.g., a portion of the extender material 42 and, after a number of cycles, the base layer 40) may adhere to the object 12. The loss of a portion of the extended life mold release agent 26 reduces the effectiveness and, thus, the life expectancy of the extended life mold release agent 26. Therefore, over time (i.e., after a certain number of foam production cycles, such as 6,000, 10,000, or 16,000), it may be desirable to clean the mold cavity 18 to remove debris, contaminants, and to replenish the extended life mold release agent 26. Accordingly, an operator, technician, or a system control module (e.g., a robotic spray system) may determine whether the mold should be cleaned (query 72). For example, an operator or technician may inspect the mold cavity 18 for visible debris and contaminants, an automated system controller may perform regular monitoring of the mold cavity 18, or the foam object 12 may be inspected for irregularities (i.e., areas where the foam material has been pulled away from the foam object 12). Additionally or alternatively, the operator, technician, or automated system controller may determine the number of foam production cycles that have been performed since the last cleaning. For example, the mold cavity 18 may be cleaned every 16,000 cycles. In situations where the number of cycles performed since the last cleaning is under 16,000 cycles, the mold cavity 18 may not be cleaned, and in situations where the number of cycles is 16,000 cycles or more, the mold cavity 18 may be cleaned.

In embodiments where no cleaning is to be performed, the extender material 42 may be re-applied to the base layer 40 as appropriate (block 74). For example, the extender material 42 may be re-applied based on a predetermined routine, such as every cycle, every other cycle, up to every nth cycle, where n may be determined based on prior foam production processes and empirical observation and statistical calculation on repair and process control. Alternatively or additionally, the extender material 42 may be re-applied based on observation of the mold cavity 18 and/or the foam object 12 (e.g., for defects or indications of loss of release agent). Thus, the application of the extender material 42 may be preventative, such as to prevent failure of the foam object 12 during mold release, and/or ameliorative, such as to correct a situation that has resulted in failure of the foam object 12 when removed or any other indictor that a significant amount of the extender material 42 has been removed. After the extender material 42 is re-applied as appropriate in accordance with block 74, the method 60 may return to the acts represented by block 66, which includes disposing the foam formulation 28 in the mold 14 using the appropriate technique (e.g., injecting or pouring in a closed or open mold cavity).

In embodiments where observation of the mold 14 and/or the foam object 12, or the number of foam production cycles dictates that the mold 14 should be cleaned, the mold cavity 18 may be cleaned (block 76). As an example, the mold 14 may be heated to a predetermined temperature for a predetermined amount of time to cause the base layer 40 and/or the extender material 42 to be easily removed from the inner surface 24. Alternatively or additionally, a solvent may be used to remove at least a portion of the extended life mold release agent 26 from the mold cavity 18. Most often the extender will be released slowly with the foam system as a potential reactant or non reactant inert material. Indeed, the acts represented by block 76 may include preparing a fresh surface wherein the base material 16 of the mold 14 is exposed at the inner surfaces 24, or may include exposing the underlying base layer 40 of the extended life mold release agent 26 (i.e., removal of the extender material 42). After the mold cavity 18 is cleaned, the mold cavity 18 may be prepared for foam production in accordance with block 64 as described above.

While only certain features and embodiments of the invention have been illustrated and described, many modifications and changes may occur to those skilled in the art (e.g., variations in sizes, dimensions, structures, shapes and proportions of the various elements, values of parameters (e.g., temperatures, pressures, etc.), mounting arrangements, use of materials, colors, orientations, etc.) without materially departing from the novel teachings and advantages of the subject matter recited in the claims. The order or sequence of any process or method steps may be varied or re-sequenced according to alternative embodiments. It is, therefore, to be understood that the appended claims are intended to cover all such modifications and changes as fall within the true spirit of the invention. Furthermore, in an effort to provide a concise description of the exemplary embodiments, all features of an actual implementation may not have been described (i.e., those unrelated to the presently contemplated best mode of carrying out the invention, or those unrelated to enabling the claimed invention). It should be appreciated that in the development of any such actual implementation, as in any engineering or design project, numerous implementation specific decisions may be made. Such a development effort might be complex and time consuming, but would nevertheless be a routine undertaking of design, fabrication, and manufacture for those of ordinary skill having the benefit of this disclosure, without undue experimentation.

## Claims

1. A system, comprising:
an extended life mold release agent (26) configured to coat a surface (24) of a mold cavity (18), wherein the extended life mold release agent (26) comprises:
a first material (40) configured to be placed in direct physical contact with the surface (24) of the mold cavity (18) to seal the surface (24); and
a second material (42) configured to coat the first material (40) to protect the first material (40) during a foam production process performed within the mold cavity (18), wherein the second material (42) comprises a siloxane oil, , wherein the siloxane oil comprises a polymer having repeating units of the formula: 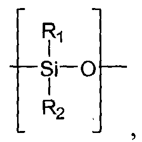 wehrein R₁ and R₂ independently comprise an aliphatic or aromatic substituent having between 2 and 8 carbon atoms.

2. The system of claim 1, wherein R₁ and R₂ are the same.

3. The sytsem of claim 1, wherein R₁ and R₂ are different.

4. The sytsem of claim 1, wherein R₁ and R₂ independently comprise an ethyl, propyl, n-butyl, tert-butyl, sec-butyl, isobutyl, amyl, isoamyl, hexyl, cyclohexyl, heptyl, or octyl substituent.

5. The system of claim 1, wherein the siloxane oil comprises a polymer having repeating units of the formula: 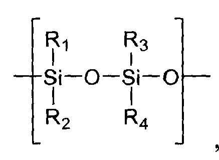 wehrein R₃ and R₄ independently comprise an aliphatic or aromatic substituent having between 1 and 8 carbon atoms.

6. The system of claim 5, wherein R₃, and R₄ independently comprise a methyl, ethyl, propyl, n-butyl, tert-butyl, sec-butyl, isobutyl, amyl, isoamyl, hexyl, cyclohexyl, heptyl, or octyl substituent.

7. The system of claim 1, wherein the first material (40) is selected from a group consisting of ceramics, plastics, and metals.

8. The system of claim 1, wherein the first material (40) comprises polytetrafluoroethylene (PTFE).

9. The system of claim 1, wherein the first material (40) comprises nickel PTFE.

10. The system of claim 1, wherein the first material (40) comprises silicon dioxide (SiO₂), titanium dioxide (TiO₂), or a combination thereof.

11. The system of claim 1, wherein the first material (40) comprises an anodized layer.

12. The system of claim 1, wherein a first thickness (46) of the second material (42) may be between 1 and 100% of a thickness (44) of the first layer (40).

13. A method, comprising:
preparing a mold cavity surface (24) with an extended life mold release agent (26) comprising a silicone oil, wherein preparing the mold cavity comprises:
applying a base layer to a surface of the mold cavity; and
coating the base material with the silicone oil, wherein the silicone oil has a coated thickness between approximately 1 percent and 100 percent of a coated base material thickness on the surface of the mold cavity (18); and performing a polyurethane foam production cycle, the polyurethane foam production cycle comprising:
disposing a foam formulation in the mold cavity (18);
polymerizing the foam formulation in the mold cavity (18) to form a foam object (12) having a shape corresponding to the mold cavity geometry; and
removing the foam object (12) from the mold.

14. The method of claim 13, wherein the siloxane oil comprises a polymer having repeating units of the formula: 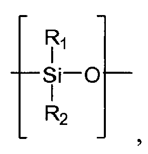 wehrein R₁ and R₂ independently comprise an aliphatic or aromatic substituent having between 2 and 8 carbon atoms.

15. The method of claim 13, wherein R₁ and R₂ independently comprise an ethyl, propyl, n-butyl, tert-butyl, sec-butyl, isobutyl, amyl, isoamyl, hexyl, cyclohexyl, heptyl, or octyl substituent.

## Patentansprüche

1. System, umfassend:
ein eine verlängerte Lebensdauer aufweisendes Formtrennmittel (26), das zum Beschichten einer Oberfläche (24) einer Formhöhlung (18) konfiguriert ist, wobei das eine verlängerte Lebensdauer aufweisende Formtrennmittel (26) Folgendes umfasst:
ein erstes Material (40), das zur Anordnung in direktem physikalischem Kontakt mit der Oberfläche (24) der Formhöhlung (18) zur Versiegelung der Oberfläche (24) konfiguriert ist; und
ein zweites Material (42), das zum Beschichten des ersten Materials (40) zum Schützen des ersten Materials (40) während eines in der Formhöhlung (18) durchgeführten Schaumstoffherstellungsprozesses konfiguriert ist, wobei das zweite Material (42) ein Siloxanöl umfasst, wobei das Siloxanöl ein Polymer mit Wiederholungseinheiten der Formel: 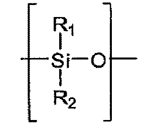 umfasst, wobei R₁ und R₂ unabhängig einen aliphatischen oder aromatischen Substituenten mit zwischen 2 und 8 Kohlenstoffatomen umfassen.

2. System nach Anspruch 1, wobei R₁ und R₂ gleich sind.

3. System nach Anspruch 1, wobei R₁ und R₂ verschieden sind.

4. System nach Anspruch 1, wobei R₁ und R₂ unabhängig einen Ethyl-, Propyl-, n-Butyl-, tert-Butyl-, sec-Butyl-, Isobutyl-, Amyl-, Isoamyl-, Hexyl-, Cyclohexyl-, Heptyl- oder Octylsubstituenten umfassen.

5. System nach Anspruch 1, wobei das Siloxanöl ein Polymer mit Wiederholungseinheiten der Formel: 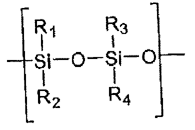 umfasst, wobei R₃ und R₄ unabhängig einen aliphatischen oder aromatischen Substituenten mit zwischen 1 und 8 Kohlenstoffatomen umfassen.

6. System nach Anspruch 5, wobei R₃ und R₄ unabhängig einen Methyl-, Ethyl-, Propyl-, n-Butyl-, tert-Butyl-, sec-Butyl-, Isobutyl-, Amyl-, Isoamyl-, Hexyl-, Cyclohexyl-, Heptyl- oder Octylsubstituenten umfassen.

7. System nach Anspruch 1, wobei das erste Material (40) aus einer Gruppe bestehend aus Keramiken, Kunststoffen und Metallen ausgewählt ist.

8. System nach Anspruch 1, wobei das erste Material (40) Polytetrafluorethylen (PTFE) umfasst.

9. System nach Anspruch 1, wobei das erste Material (40) Nickel-PTFE umfasst.

10. System nach Anspruch 1, wobei das erste Material (40) Siliciumdioxid (SiO₂), Titandioxid (TiO₂) oder eine Kombination davon umfasst.

11. System nach Anspruch 1, wobei das erste Material (40) eine anodisierte Schicht umfasst.

12. System nach Anspruch 1, wobei eine erste Dicke (46) des zweiten Materials (42) zwischen 1 und 100% einer Dicke (44) der ersten Schicht (40) liegen kann.

13. Verfahren, das Folgendes umfasst:
Herstellen einer Formhöhlungsoberfläche (24) mit einem eine verlängerte Lebensdauer aufweisenden Formtrennmittel (26), das ein Silikonöl umfasst,
wobei das Herstellen der Formhöhlung Folgendes umfasst:
Aufbringen einer Basisschicht auf eine Oberfläche der Formhöhlung und
Beschichten des Basismaterials mit dem Silikonöl, wobei das Silikonöl eine Schichtdicke zwischen ungefähr 1 Prozent und 100 Prozent einer Basismaterial-Schichtdicke auf der Oberfläche der Formhöhlung (18) aufweist; und
Durchführen eines Polyurethanschaumstoff-Herstellungszyklus, wobei der Polyurethanschaumstoff-Herstellungszyklus Folgendes umfasst:
Anordnen einer Schaumstoffformulierung in der Formhöhlung (18);
Polymerisieren der Schaumstoffformulierung in der Formhöhlung (18) zur Bildung eines Schaumstoffobjekts (12) mit einer der Geometrie der Formhöhlung entsprechenden Form; und
Entfernen des Schaumstoffobjekts (12) aus der Form.

14. Verfahren nach Anspruch 13, bei dem das Siloxanöl ein Polymer mit Wiederholungseinheiten der Formel: 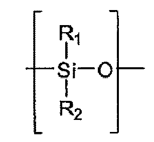 umfasst, wobei R₁ und R₂ unabhängig einen aliphatischen oder aromatischen Substituenten mit zwischen 2 und 8 Kohlenstoffatomen umfassen.

15. Verfahren nach Anspruch 13, bei dem R₁ und R₂ unabhängig einen Ethyl-, Propyl-, n-Butyl-, tert-Butyl-, sec-Butyl-, Isobutyl-, Amyl-, Isoamyl-, Hexyl-, Cyclohexyl-, Heptyl- oder Octylsubstituenten umfassen.

## Revendications

1. Système, comprenant :
un agent de démoulage à durée de vie prolongée (26) configuré pour recouvrir une surface (24) d'une cavité de moule (18), l'agent de démoulage à durée de vie prolongée (26) comprenant :
un premier matériau (40) configuré pour être placé en contact physique direct avec la surface (24) de la cavité de moule (18) afin de sceller la surface (24) ; et
un deuxième matériau (42) configuré pour recouvrir le premier matériau (40) afin de protéger le premier matériau (40) lors d'un procédé de production de mousse effectué à l'intérieur de la cavité de moule (18), le deuxième matériau (42) comprenant une huile de siloxane, l'huile de siloxane comprenant un polymère ayant des motifs répétitifs de la formulé : 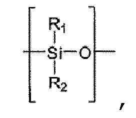 dans laquelle R₁ et R₂ comprennent indépendamment un substituant aliphatique ou aromatique ayant entre 2 et 8 atomes de carbone.

2. Système de la revendication 1, dans lequel R₁ et R₂ sont identiques.

3. Système de la revendication 1, dans lequel R₁ et R₂ sont différents.

4. Système de la revendication 1, dans lequel R₁ et R₂ comprennent indépendamment un substituant éthyle, propyle, n-butyle, tert-butyle, sec-butyle, isobutyle, amyle, isoamyle, hexyle, cyclohexyle, heptyle, ou octyle.

5. Système de la revendication 1, dans lequel l'huile de siloxane comprend un polymère ayant des motifs répétitifs de la formulé : 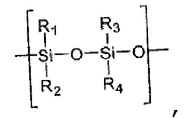 dans laquelle R₃ et R₄ comprennent indépendamment un substituant aliphatique ou aromatique ayant entre 1 et 8 atomes de carbone.

6. Système de la revendication 5, dans lequel R₃ et R₄ comprennent indépendamment un substituant méthyle, éthyle, propyle, n-butyle, tert-butyle, sec-butyle, isobutyle, amyle, isoamyle, hexyle, cyclohexyle, heptyle, ou octyle.

7. Système de la revendication 1, dans lequel le premier matériau (40) est choisi dans un groupe constitué par les céramiques, les plastiques, et les métaux.

8. Système de la revendication 1, dans lequel le premier matériau (40) comprend du polytétrafluoroéthylène (PTFE).

9. Système de la revendication 1, dans lequel le premier matériau (40) comprend du nickel-PTFE.

10. Système de la revendication 1, dans lequel le premier matériau (40) comprend du dioxyde de silicium (SiO₂), du dioxyde de titane (TiO₂), ou une combinaison de ceux-ci.

11. Système de la revendication 1, dans lequel le premier matériau (40) comprend une couche anodisée.

12. Système de la revendication 1, dans lequel une première épaisseur (46) du deuxième matériau (42) peut représenter entre 1 et 100 % d'une épaisseur (44) de la première couche (40).

13. Procédé, comprenant :
la préparation d'une surface de cavité de moule (24) avec un agent de démoulage à durée de vie prolongée (26) comprenant une huile de silicone, la préparation de la cavité de moule comprenant :
l'application d'une couche de base à une surface de la cavité de moule ; et
le revêtement du matériau de base avec l'huile de silicone, l'huile de silicone ayant une épaisseur de revêtement représentant entre approximativement 1 pour cent et 100 pour cent de l'épaisseur de revêtement du matériau de base sur la surface de la cavité de moule (18) ; et
la réalisation d'un cycle de production de mousse de polyuréthane, le cycle de production de mousse de polyuréthane comprenant :
la mise en place d'une formulation de mousse dans la cavité de moule (18) ;
la polymérisation de la formulation de mousse dans la cavité de moule (18) pour former un objet en mousse (12) ayant une forme correspondant à la géométrie de la cavité de moule ; et
le retrait de l'objet en mousse (12) du moule.

14. Procédé de la revendication 13, dans lequel l'huile de siloxane comprend un polymère ayant des motifs répétitifs de la formulé : 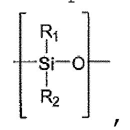 dans laquelle R₁ et R₂ comprennent indépendamment un substituant aliphatique ou aromatique ayant entre 2 et 8 atomes de carbone.

15. Procédé de la revendication 13, dans lequel R₁ et R₂ comprennent indépendamment un substituant éthyle, propyle, n-butyle, tert-butyle, sec-butyle, isobutyle, amyle, isoamyle, hexyle, cyclohexyle, heptyle, ou octyle.
